# FASCICULE DE BREVET EUROPEEN

(11) **EP 2 633 642 B1**
(45) Date de publication et mention de la délivrance du brevet: **17.04.2019**
(21) Numéro de dépôt: 11832124.9
(22) Date de dépôt: 26.10.2011
(51) Int. Cl.: H04L 29/08, H04L 12/18

(54) **PROCÉDÉS DE COMMUNICATION, DISPOSITIF DE COMMUNICATION, ENTITÉ DE GESTION, PROGRAMME D'ORDINATEUR ET SUPPORT D'INFORMATIONS POUR LA DISTRIBUTION HYBRIDE DE DONNÉES**
KOMMUNIKATIONSVERFAHREN, KOMMUNIKATIONSGERÄT, STEUERUNGSGERÄT, RECHNERPROGRAMM UND SPEICHERMEDIUM ZUR HYBRIDEN VERTEILUNG VON DATEN
METHODS OF COMMUNICATION, COMMUNICATION DEVICE, MANAGEMENT ENTITY, COMPUTER PROGRAM AND STORAGE MEDIUM FOR THE HYBRID DISTRIBUTION OF DATA

(30) Priorité: 27.10.2010 FR 1058857
(43) Date de publication de la demande: 04.09.2013
(73) Titulaire: Orange, 75015 Paris (FR)
(72) Inventeur: STEPHAN, Emile, F-22560 Pleumeur Bodou (FR); ELLOUZE, Selim, F-22300 Lannion (FR); FROMENTOUX, Gaël, F-22560 Ile Grande (FR)
(74) Mandataire: Cabinet Beau de Loménie
(86) Numéro de dépôt international: PCT/FR2011/052508
(87) Numéro de publication internationale: WO 2012/056176

(56) Documents cités:
- EP-A1- 1 617 591
- TETSUYA OH-ISHI ET AL: "Study of the Relationship between Peer-to-Peer Systems and IP Multicasting", IEEE COMMUNICATIONS MAGAZINE, IEEE SERVICE CENTER, PISCATAWAY, US, vol. 41, no. 1, 1 janvier 2003 (2003-01-01), pages 80-84, XP011092983, ISSN: 0163-6804, DOI: DOI:10.1109/MCOM.2003.1166659

## Description

### Arrière-plan de l'invention

L'invention se rapporte au domaine général des télécommunications. L'invention se rapporte en particulier à la distribution de données, par exemple des données audiovisuelles, dans un réseau de télécommunications.

La diffusion groupée sur IP (« *Multicast IP*» en anglais) est une technique de distribution de données vers plusieurs destinataires formant un groupe, dans un réseau IP. Par exemple, le document RFC 3569 (http://tools.ietf.org/html/rfc3569) décrit une technique de diffusion groupée point à multipoints appelée PIM-SSM, permettant de distribuer un flux de données d'une source S vers un groupe G de destinataires. L'utilisation d'une telle technique est actuellement limitée au domaine d'un opérateur de télécommunications.

Par ailleurs, dans un réseau pair-à-pair (P2P pour « *Peer-To-Peer*» en anglais), les données d'un contenu sont partagées entre des clients (entre des pairs), qui s'échangent des morceaux des données (appelés « *chunks* » en anglais) afin de rassembler l'ensemble des données du contenu. A cet effet, chaque client établit des connexions vers les autres clients du réseau pair-à-pair. Pour obtenir la liste des autres clients partageant les données d'un contenu particulier, un client s'enregistre auprès d'une entité de gestion du réseau pair-à-pair, généralement appelée « Tracker ».

Le document EP1617591 A1 divulgue un système de distribution de données hybride et centralisé.

La distribution de données dans un réseau pair-à-pair présente plusieurs inconvénients :
- Le trafic généré est important en raison de la redondance des morceaux échangés entre les différents clients. De plus, des mécanismes de requête-réponse entre clients et avec l'entité de gestion génèrent un trafic supplémentaire par rapport au trafic d'échange de données.
- Les clients du réseau pair-à-pair sont reliés entre eux par un réseau de télécommunications sous-jacent, pouvant être composé de plusieurs domaines, par exemple par le réseau Internet. Or, le réseau pair-à-pair fonctionne de façon indépendante de l'architecture du réseau de télécommunications sous-jacent. Ainsi, le réseau pair-à-pair peut générer un trafic important sur les liaisons inter-domaines.
- Un réseau pair-à-pair n'est pas efficace pour distribuer des données en temps réel avec des délais très courts. En effet, un client doit rechercher un autre client qui dispose des morceaux manquants pour reconstituer l'ensemble des données, ce qui implique un délai de traitement avant d'obtenir les données.

Il existe donc un besoin pour une meilleure technique de distribution de données dans un réseau de télécommunications.

### Objet et résumé de l'invention

L'invention vise à répondre à ce besoin en proposant un procédé de communication effectué par un dispositif de communication selon la revendication 1, un dispositif de communication selon la revendication 5, un procédé de communication effectué par une entité de gestion selon la revendication 6, une entité de gestion selon la revendication 7, un programme d'ordinateur selon la revendication 11, et un support d'informations lisible par un ordinateur selon la revendication 12. Des modes de réalisation préférés se trouvent dans les revendications dépendantes.

Autrement dit, il est proposé une architecture de distribution hybride dans laquelle un noeud source collecte des données sur un réseau pair-à-pair, puis utilise une technique de diffusion groupée pour distribuer ces données vers des noeuds feuille qui eux-mêmes jouent le rôle de client du réseau pair-à-pair. Grâce à ces caractéristiques, le réseau pair-à-pair comprend plusieurs clients disposant des données (à savoir les noeuds feuille), sans que la transmission des données vers les noeuds feuille implique un trafic important dans le réseau de télécommunications. L'architecture permet donc de réduire le trafic généré dans le réseau de télécommunications par l'échange de données sur le réseau pair-à-pair. De plus, la distribution par la technique de diffusion groupée peut être rapide et mieux compatible avec les contraintes d'une distribution en temps réel. Enfin, pour les clients finaux, l'utilisation de la technique de distribution hybride est transparente.

Le noeud source et les noeuds feuille peuvent être situés dans un domaine d'un opérateur de télécommunications, et le réseau de télécommunications peut comprendre en outre des premiers noeuds client du réseau pair-à-pair situés dans ledit domaine et au moins un deuxième noeud client du réseau pair-à-pair situé en dehors dudit domaine.

Dans ce cas, l'architecture permet de limiter le trafic inter-domaines. En effet, comme expliqué précédemment, chaque noeud feuille joue le rôle de client du réseau pair-à-pair et dispose des données, qu'il a reçues du noeud source. Ainsi, les premiers noeuds client peuvent obtenir les morceaux de données qui leur manquent depuis les noeuds feuille, sans nécessiter d'établir une liaison inter-domaines avec le deuxième noeud client. L'architecture n'est toutefois pas limitée à ce mode de réalisation. Ainsi, dans une variante, le noeud source, les noeuds feuille et tous les noeuds clients du réseau pair-à-pair sont situés dans le domaine d'un opérateur de télécommunications.

Corrélativement, il est proposé un procédé de communication effectué par un dispositif de communication, dit noeud feuille, d'un réseau de télécommunications, comprenant :
- une étape de réception de données distribuées par un noeud source du réseau de télécommunications en utilisant une technique de diffusion groupée,
caractérisé en ce qu'il comprend :
- une étape d'envoi, vers une entité de gestion d'un réseau pair-à-pair gérant la diffusion desdites données sur le réseau pair-à-pair, d'un message d'enregistrement en tant que client du réseau pair-à-pair ;
- une étape de transmission des données reçues vers au moins un client du réseau pair-à-pair, par distribution sur le réseau pair-à-pair.

De manière correspondante, il est proposé également un dispositif de communication pour un réseau de télécommunications, comprenant :
- des moyens de réception de données distribuées par un noeud source du réseau de télécommunications en utilisant une technique de diffusion groupée,
caractérisé en ce qu'il comprend :
- des moyens d'envoi, vers une entité de gestion d'un réseau pair-à-pair gérant la diffusion desdites données sur le réseau pair-à-pair, d'un message d'enregistrement en tant que client du réseau pair-à-pair ;
- des moyens de transmission des données reçues vers au moins un client (10) du réseau pair-à-pair, par distribution sur le réseau pair-à-pair.

Corrélativement, il est proposé aussi un procédé de communication effectué par un dispositif de communication, dit noeud source, d'un réseau de télécommunications, comprenant :
- une étape de réception, depuis au moins un client d'un réseau pair-à-pair, de données distribuées sur le réseau pair-à-pair,
caractérisé en ce qu'il comprend :
- une étape de distribution des données vers une pluralité de noeuds, dit noeuds feuille, du réseau de télécommunications en utilisant une technique de diffusion groupée.

De manière correspondante, il est proposé un dispositif de communication pour un réseau de télécommunications, comprenant :
- des moyens de réception, depuis au moins un client d'un réseau pair-à-pair, de données distribuées sur le réseau pair-à-pair,
caractérisé en ce qu'il comprend :
- des moyens de distribution des données vers une pluralité de noeuds, dit noeuds feuille, du réseau de télécommunications en utilisant une technique de diffusion groupée.

Les procédés et dispositifs de communications précités permettent d'obtenir les avantages discutés en référence au réseau de télécommunications conforme à l'invention.

Dans le procédé de communication mis en oeuvre par un noeud feuille, le message d'enregistrement peut comprendre une information de localisation du noeud feuille.

Dans ce cas, l'entité de gestion peut favoriser l'établissement de liaison du réseau pair-à-pair entre le noeud feuille et des clients du réseau pair-à-pair situés à proximité. Cela contribue à limiter le trafic généré, en particulier le trafic inter-domaines.

Le procédé de communication mis en oeuvre par un noeud feuille comprend, avant l'étape de réception de données :
- une étape de réception d'information d'audience des données,
- une étape de décision de participation ou non à la distribution des données, en fonction des informations d'audience, et
- en réponse à une décision de participation à la distribution des données, une étape de souscription auprès du noeud source.

Cela permet d'adapter le nombre de noeuds feuille qui participent à la distribution de données à l'audience des données.

Le procédé de communication mis en oeuvre par un noeud feuille peut comprendre, en outre, une étape de distribution des données vers un terminal du réseau de télécommunications en utilisant une technique différente de la distribution sur le réseau pair-à-pair.

Il peut s'agir par exemple d'une technique de télévision sur IP (IPTV). Ainsi, les données sont accessibles auprès du noeud feuille pour des clients du réseau pair-à-pair, mais également pour des terminaux qui souhaitent recevoir les données par exemple en IPTV.

Le procédé de communication mis en oeuvre par le noeud source peut comprendre, avant l'étape de réception de données :
- une étape de réception d'un message d'instruction de la part d'une entité de commande,
- en réponse à la réception du message d'instruction, une étape d'envoi, vers une entité de gestion du réseau pair-à-pair gérant la diffusion desdites données sur le réseau pair-à-pair, d'un message d'enregistrement en tant que client du réseau pair-à-pair.

Cela permet à l'entité de commande de décider de mettre en oeuvre ou non la technique de distribution hybride, en fonction par exemple de l'audience des données. Lorsque l'audience est faible, les avantages apportés par la technique de distribution hybride sont d'ampleur limitée. L'entité de commande peut alors décider de ne pas l'utiliser.

Corrélativement, il est proposé un procédé de communication effectué par un dispositif de communication, dit entité de gestion, d'un réseau de télécommunications, comprenant :
- une étape d'obtention d'information d'audience de données distribuées dans le réseau de télécommunications,
- une étape de décision d'utiliser ou non une technique de distribution hybride pour la distribution des données, en fonction des informations d'audience, et
- en réponse à la décision d'utiliser la technique de distribution hybride, une étape d'envoi d'un message d'instruction vers un autre noeud du réseau de télécommunication.

De manière correspondante, il est proposé un dispositif de communication pour réseau de télécommunications, comprenant :
- des moyens d'obtention d'information d'audience de données distribuées dans le réseau de télécommunications,
- des moyens de décision d'utiliser ou non une technique de distribution hybride pour la distribution des données, en fonction des informations d'audience, et
- des moyens d'envoi d'un message d'instruction vers un autre noeud du réseau de télécommunication, activés en réponse à la décision d'utiliser la technique de distribution hybride.

Ainsi, le réseau de télécommunication peut comprendre un tel dispositif de communication.

Il est visé aussi un programme d'ordinateur comportant des instructions pour l'exécution des étapes d'un procédé de communication conforme à l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Il est visé aussi un support d'enregistrement ou support d'informations lisible par un ordinateur, et comportant des instructions d'un programme d'ordinateur tel que mentionné ci-dessus.

Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un réseau de télécommunications selon un mode de réalisation de l'invention,
- la figure 2 représente un dispositif de communication du réseau de télécommunications de la figure 1,
- la figure 3 représente un procédé, contrôle par une entité de commande, permettant d'amener le réseau de télécommunications dans l'état de la figure 1,
- la figure 4 représente un procédé de communication selon un mode de réalisation de l'invention, mis en oeuvre par un noeud feuille du réseau de la figure 1, et
- la figure 5 représente un procédé de communication selon un mode de réalisation de l'invention, mis en oeuvre par un noeud source du réseau de la figure 1.

### Description détaillée de modes de réalisation

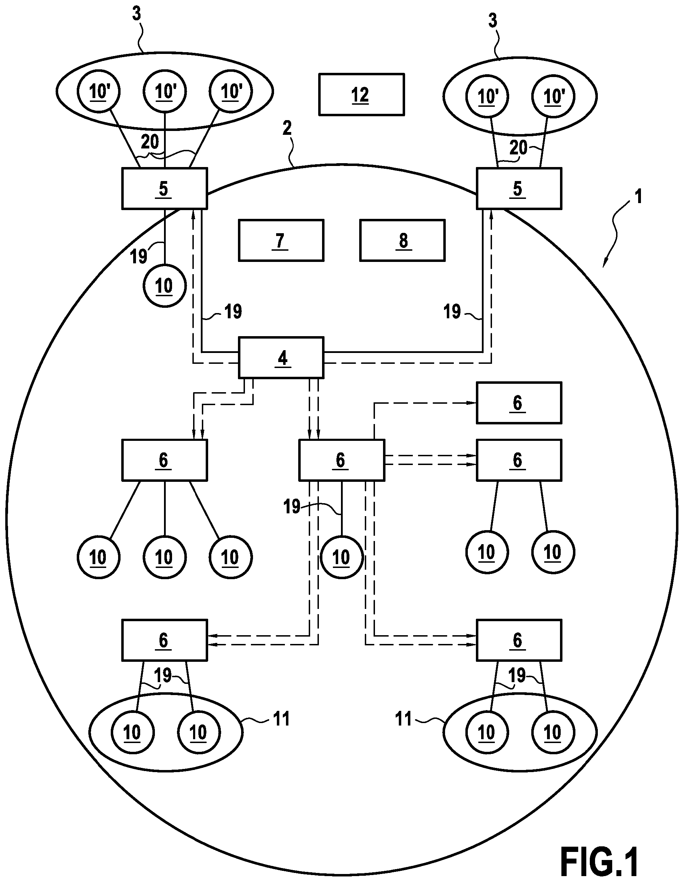

La **figure 1** représente un réseau de télécommunications 1 selon un mode de réalisation de l'invention. Le réseau de télécommunications 1 comprend un domaine 2 géré par un opérateur de télécommunications, reliés à d'autres domaines 3 qui ne sont pas gérés par le même opérateur de télécommunications.

Dans le domaine 2, le réseau de télécommunications 1 comprend un noeud source 4, des noeuds collecteurs 5, des noeuds feuille 6, une entité de commande 7, une entité de localisation 8 et des clients 10. Le domaine 2 comprend des sous-réseaux 11 dans lesquels sont situés certains des clients 10.

En dehors du domaine 2, dans un des domaines 3 ou ailleurs, le réseau de télécommunications 1 comprend des clients 10' et une entité de gestion 12.

Le noeud source 4, les noeuds collecteurs 5, les noeuds feuille 6, l'entité de commande 7, l'entité de localisation 8, les clients 10 et 10' et l'entité de gestion 12 de la figure 1 sont des entités fonctionnelles, chacune pouvant être mise en oeuvre par l'exécution d'un programme d'ordinateur respectif sur un dispositif de communication 13 du réseau de télécommunications 1.

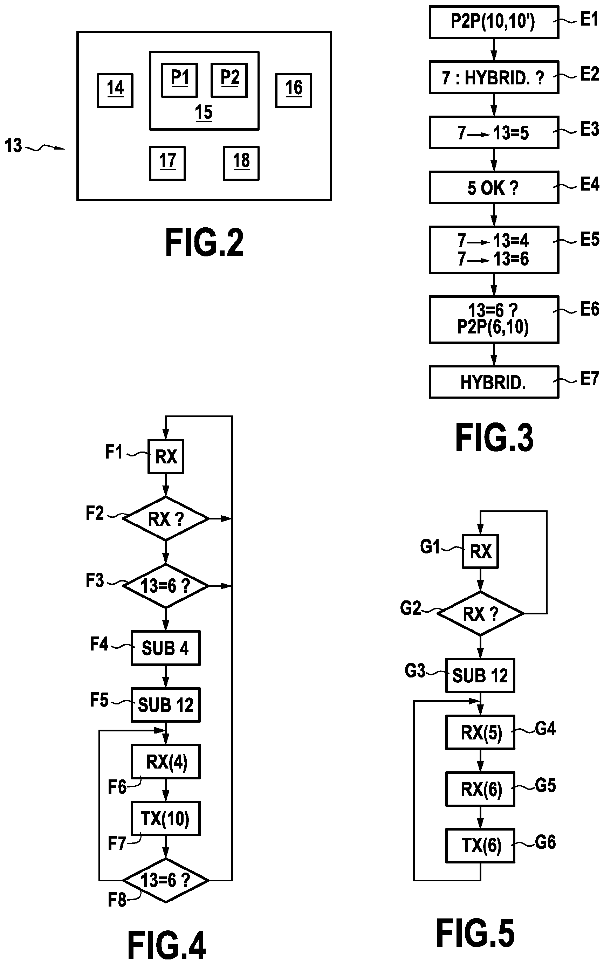

Ainsi, la **figure 2** représente un dispositif de communication 13 qui présente l'architecture matérielle d'un ordinateur et comprend un processeur 14, une mémoire morte 15, une mémoire vive 16, éventuellement une mémoire non-volatile 17, et une interface de communication 18. Le processeur 14 permet l'exécution de programme d'ordinateur P1, P2,... mémorisés dans la mémoire morte 15, en utilisant la mémoire vive 16. La mémoire vive 16 et la mémoire non-volatile 17 permettent également de mémoriser des données. L'interface de communication 18 permet d'échanger des messages avec d'autres dispositifs de communication 13 du réseau de télécommunications 1. Par exemple, dans le domaine 2, les dispositifs de communication 13 s'échangent des messages en utilisant le protocole IP.

Ci-après, lorsqu'on fait référence au noeud source 4, à un des noeuds collecteurs 5, à un des noeuds feuille 6, à l'entité de commande 7, à l'entité de localisation 8, à un des clients 10 et 10' ou à l'entité de gestion 12, on peut faire référence à l'entité fonctionnelle elle-même ou au dispositif de communication 13 qui met en oeuvre cette entité fonctionnelle.

Ainsi, les clients 10 sont par exemple des terminaux d'utilisateur ayant souscrit des services de télécommunications auprès de l'opérateur du domaine 2.

Le noeud source 4, les noeuds collecteurs 5, les noeuds feuille 6, l'entité de commande 7, l'entité de localisation 8peuvent être des dispositifs de communication 13 de l'opérateur de télécommunications qui gère le domaine 2, par exemple des routeurs ou des serveurs. Un dispositif de communication 13 particulier peut comprendre, dans sa mémoire morte 15, plusieurs programmes d'ordinateur lui permettant de jouer le rôle de noeud source 4, de noeud collecteur 5, de noeud feuille 6, de l'entité de commande 7, de l'entité de localisation 8 ou de routeur. Notamment, un dispositif de communication 13 particulier peut simultanément jouer plusieurs rôles, par exemple noeud collecteur 5, noeud source 4 et entité de commande 7.

Les clients 10' sont par exemple des terminaux d'utilisateur ayant souscrit des services de télécommunications auprès d'un opérateur différent de l'opérateur de télécommunications du domaine 2. L'entité de gestion 12 est par exemple un serveur informatique.

On décrit maintenant le déroulement de la distribution des données d'un contenu C, par exemple un contenu audiovisuel, dans le réseau de télécommunications 1, lorsque le réseau de télécommunications se trouve dans l'état représenté sur la figure 1.

Les clients 10 et 10', le noeud source 4, les noeuds collecteurs 5, les noeuds feuille 6 et l'entité de gestion 12 forment un réseau pair-à-pair pour la distribution des données d'un contenu C. On décrit maintenant brièvement le fonctionnement du réseau pair-à-pair.

Initialement, une source (non représentée) qui dispose d'un contenu C à distribuer demande à l'entité de gestion 12 de gérer la distribution du contenu C dans un réseau pair-à-pair. L'entité de gestion 12 annonce alors le contenu C dans son index de contenus disponibles.

De manière connue, dans un réseau pair-à-pair, un client du réseau pair-à-pair qui désire obtenir le contenu C s'enregistre auprès de l'entité de gestion 12 pour obtenir la liste des clients qui distribuent le contenu. Ensuite, le client établi des liaisons avec les autres clients indiqués par l'entité de gestion 12 pour échanger des morceaux de données du contenu C, afin de reconstituer l'ensemble du contenu C.

Dans le réseau de télécommunications 1 tel que représenté sur la figure 1, les clients 10 et 10', le noeud source 4, les noeuds collecteurs 5, les noeuds feuille 6 constituent des clients du réseau pair-à-pair. Ainsi, sur la figure 1, on a représentés des liaisons 19 et 20 établies dans le réseau pair-à-pair. Les liaisons 19 sont des liaisons intra-domaine entre un client 10 et un noeud feuille 6 ou un noeud collecteur 5, ou entre le noeud source 4 et un noeud collecteur 5. Les liaisons 20 sont des liaisons inter-domaines entre un noeud collecteur 5 et un client 10'.

Bien entendu, le réseau pair-à-pair peut comprendre d'autres liaisons, par exemple une liaison inter-domaine entre un client 10 et un client 10'. Cependant, comme expliqué ci-après, l'invention permet d'éviter ou au moins de limiter ce type de liaison.

En effet, dans l'état représenté sur la figure 1, le noeud source 4 forme, avec les noeuds feuille 6, un arbre de diffusion de données point-à-multipoints permettant de distribuer des données du noeud source 4 aux noeuds feuille 6 par une technique de diffusion groupée sur IP (« *Multicast IP* » en anglais). Il s'agit par exemple de la technique PIM-SSM citée en introduction. Les données distribuées dans cet arbre de diffusion peuvent passer par l'intermédiaire de routeurs (non représentés).

Ainsi, les noeuds collecteurs 5 collectent des morceaux de données du contenu C en dehors du domaine 2, et les transmettent au noeud source 4 par des liaisons 19 du réseau pair-à-pair. Le noeud source 4 reçoit donc des données distribuées sur le réseau pair-à-pair.

Puis, le noeud source 4 transmet les données reçues vers les noeuds feuille 6, en utilisant la technique de diffusion groupée.

Les noeuds feuille 6 disposent ainsi des données provenant du noeud source 4. Chaque noeud feuille 6 étant un client du réseau pair-à-pair, les clients 10 situés dans le domaine 2 peuvent donc obtenir les morceaux de données qui leur manquent en établissant une liaison 19 intra-domaine du réseau pair-à-pair.

Autrement dit, les données du contenu C sont distribuées en utilisant une technique hybride, combinant la distribution dans un réseau pair-à-pair et, simultanément, la distribution par une technique de distribution groupée.

Grâce à cette technique de distribution hybride, les clients 10 du domaine 2 peuvent obtenir les données depuis un noeud feuille 6 proche, sans nécessiter l'établissement d'une liaison inter-domaines vers un client 10'. Le trafic inter-domaine est donc limité. De plus, la transmission des données du noeud source 4 aux noeuds feuille 6 utilisant un technique de diffusion groupée, elle ne génère pas de trafic redondant important. Le trafic dans le domaine 2 est donc également limité. Enfin, la technique de diffusion groupée offre des délais mieux compatibles avec la distribution de données en temps réel.

Ainsi, dans l'état de la figure 1, le réseau de télécommunications 1 permet une distribution efficace des données du contenu C dans le domaine 2. De plus, les clients 10 obtiennent les données par le réseau pair-à-pair. L'utilisation de la technique de distribution hybride est donc, pour eux, totalement transparente. Les clients 10 ne doivent donc pas s'adapter à la technique de distribution hybride utilisée dans le domaine 2.

En référence à la **figure 3****,** on décrit maintenant le déroulement d'un procédé, contrôlé par l'entité de commande 7, qui permet d'amener le réseau de télécommunications 1 dans l'état de la figure 1.

On considère qu'initialement, aucun dispositif de communication 13 du domaine 2 ne joue le rôle particulier de noeud source 4, de noeud collecteur 5 ou de noeud feuille 6. Par exemple, le réseau de télécommunications 1 comprend des dispositifs de communication 13 qui sont des routeurs en charge de router le trafic IP, ayant dans leur mémoire morte 15 les programmes d'ordinateur permettant de jouer le rôle de noeud source 4, de noeud collecteur 5 ou de noeud feuille 6, mais n'exécutant pas ces programmes.

Dans cet état initial, à l'étape E1, des clients 10 et des clients 10' échangent les données du contenu C sur le réseau pair-à-pair. Comme expliqué précédemment, cela peut impliquer un important trafic redondant dans le domaine 2 ainsi qu'un trafic inter-domaines important, en particulier si le nombre de clients 10 est élevé.

L'entité de commande 7 peut communiquer avec les dispositifs de communication 13 susceptibles de jouer le rôle de noeud source 4, de noeud collecteur 5 ou de noeud feuille 6. Par exemple, l'entité de commande 7 établi un arbre de diffusion, dit arbre de signalisation, utilisant la technique PIM-SSM et permettant d'envoyer notamment des instructions aux dispositifs de communication 13. L'entité de commande 7 peut également annoncer un port d'écoute pour recevoir des messages de retour des dispositifs de communication 13.

L'entité de commande 7 obtient des informations de localisation des dispositifs de communication 13 de l'arbre de signalisation, de la part de l'entité de localisation 8. L'entité de localisation 8 est par exemple un serveur ALTO utilisant le protocole ALTO, tels que définis par l'IETF (« *Internet Engineering Task Force* »). Dans ce cas, les informations de localisation sont un identifiant appelé PID, qui correspond à un groupe d'adresse IP, un sous-réseau, un système autonome, plusieurs systèmes autonomes,...

A l'étape E2, l'entité de commande 7 obtient des informations sur les contenus gérés par l'entité de gestion 12, et sur l'audience de ces contenus dans le domaine 2. Ces informations sont par exemple obtenues en interrogeant l'entité de gestion 12, un client 10 ou un client 10'.

En fonction des données obtenues, l'entité de commande 7 décide d'utiliser la technique de distribution hybride précédemment décrite pour distribuer un contenu C. Par exemple, l'entité de commande 7 décide d'utiliser la technique de distribution hybride si le nombre de clients 10 cherchant à obtenir le contenu C est supérieur à un seuil prédéterminé.

En réponse à la décision d'utiliser la technique de distribution hybride, l'entité de commande 7 sélectionne, à l'étape E3, certains des dispositifs de communication 13 de l'arbre de signalisation pour jouer le rôle de noeud collecteur 5. Ainsi, l'entité de commande 7 envoie un message d'instruction vers les dispositifs de communication 13 sélectionnés.

En réponse à la réception de ce message d'instructions, les dispositifs de communication 13 deviennent des noeuds collecteurs 5 en lançant l'exécution du programme d'ordinateur correspondant. Les noeuds collecteurs 5 s'enregistrent alors auprès de l'entité de gestion 12, établissent des liaisons 20 avec des clients 10' et commencent à obtenir des données du contenu C sur le réseau pair-à-pair.

Après une durée prédéterminée, à l'étape E4, chaque noeud collecteur 5 envoie un message de rapport à l'entité de commande 7, indiquant par exemple l'audience du contenu C à proximité et la fiabilité d'obtention des données du contenu C. En fonction des différents messages de rapport reçus, l'entité de commande 7 peut confirmer ou annuler la décision d'utilisation de la technique de distribution hybride, et affiner la sélection des noeuds collecteurs 5.

En cas de confirmation de la décision d'utilisation de la technique de distribution hybride, à l'étape E5, l'entité de commande 7 sélectionne un dispositif de communication 13 pour jouer le rôle de noeud source 4. Ainsi, l'entité de commande 7 envoie un message d'instruction vers le dispositif de communication 13 sélectionné. En réponse à la réception de ce message d'instructions, le dispositif de communication 13 devient le noeud source 4 en lançant l'exécution du programme d'ordinateur correspondant. Le noeud source 4 s'enregistre alors auprès de l'entité de gestion 12, établit des liaisons 19 avec les noeuds collecteurs 5 et commence à obtenir des données du contenu C par le réseau pair-à-pair.

Par ailleurs, l'entité de gestion 7 envoie un message d'information vers les autres dispositifs de communication 13 susceptibles de jouer le rôle de noeuds feuille 6, les informant que le contenu C est disponible auprès du noeud source 4 en utilisant un technique de diffusion groupée. Ce message d'information indique également l'audience du contenu C à proximité du dispositif de communication 13, c'est-à-dire le nombre de clients 10 à proximité du dispositif de communication 13 qui souhaitent obtenir le contenu C. La proximité entre un client 10 et un dispositif de communication 13 peut être déterminée en utilisant les informations de localisation transmises par l'entité de commande 7. Par exemple, un client 10 et un dispositif de communication 13 situés dans le même sous-domaine 11 sont considérés à proximité l'un de l'autre.

En réponse à ce message d'information, à l'étape E6, chaque dispositif de communication 13 concerné décide de participer à la distribution du contenu C ou non, par exemple en fonction de l'audience du contenu C indiquée par l'entité de commande 7. Par exemple, un dispositif de communication 13 décide de participer à la distribution du contenu C si l'audience du contenu C à proximité est supérieure à un seuil prédéterminé.

Lorsqu'il décide de participer à la distribution du contenu C, le dispositif de communication 13 devient le noeud feuille 6 en lançant l'exécution du programme d'ordinateur correspondant. Ainsi, d'une part le noeud feuille 6 souscrit à l'arbre de distribution des données pour obtenir les données du contenu C de la part du noeud source 4, par la technique de diffusion groupée, et d'autre part le noeud feuille 6 s'enregistre auprès de l'entité de gestion 12 en tant que client du réseau pair-à-pair, et établit des liaisons 19 avec des clients 10.

Chaque noeud feuille 6 informe l'entité de commande 7 qu'il a décidé de participer à la distribution du contenu C. Il envoie également un message de rapport à l'entité de commande 7, indiquant par exemple l'audience du contenu C à proximité et la fiabilité d'obtention des données du contenu C.

A l'étape E7, le réseau de télécommunications 1 se trouve alors dans l'état représenté à la figure 1 et décrit précédemment, dans lequel le contenu C est distribué vers les clients 10 en utilisant la technique de distribution hybride.

On a décrit une technique de distribution hybride d'un contenu C. Bien entendu, plusieurs contenus différents peuvent être distribués dans le réseau de télécommunications 1, la technique de distribution hybride étant mise en oeuvre parallèlement pour chaque contenu. Chaque contenu correspond par exemple à une chaine de télévision distribuée en temps réel.

Un noeud feuille 6 peut réévaluer périodiquement sa décision de participer à la distribution d'un contenu C. Par exemple, un noeud feuille 6 peut décider de ne plus participer à la distribution d'un contenu C en fonction de l'audience d'un contenu C à proximité, des ses capacités de traitement, de sa bande passante disponible compte tenu d'autres contenus traités en parallèle,...

Lors de son enregistrement auprès de l'entité de gestion 12, un noeud feuille 6 peut communiquer sa localisation, par exemple en envoyant l'identifiant PID précité. Dans ce cas, l'entité de gestion 12 peut proposer au client 10 ayant le même PID d'établir une liaison 19 avec le noeud feuille 6, ce qui contribue à limiter le trafic dans le domaine 2 et le trafic inter-domaine.

Le réseau pair-à-pair peut comprendre des clients ayant un statut particulier (connu sous le nom de « *Super-peer* » en anglais), signifiant qu'ils disposent d'une bonne capacité de stockage ou d'une bonne bande passante disponible. Les autres clients du réseau pair-à-pair ont donc tendance à favoriser l'établissement de liaison vers ces clients au statut particulier. L'entité de commande 7 peut demander à l'entité de gestion 12 ou à toute autre entité qui gère le statut des clients du réseau pair-à-pair d'attribuer ce statut particulier aux noeuds feuille 6, pour favoriser l'établissement de liaison 19 entre les clients 10 et les noeuds feuille 6 à proximité.

Un noeud feuille 6 transmet les données du contenu C qu'il reçoit du noeud source 4 vers des clients 10 du réseau pair-à-pair. Dans un mode de réalisation, le réseau de télécommunications 1 comprend également des terminaux (non représenté) qui souhaitent obtenir le contenu C sans se connecter au réseau pair-à-pair. Par exemple, un terminal d'un utilisateur souhaite obtenu le contenu C selon un protocole de télévision sur IP (IPTV). Dans ce cas, un noeud feuille 6 peut également transmettre les données du contenu C qu'il reçoit du noeud source 4 vers le terminal en utilisant une technique de télévision sur IP (IPTV). L'entité de gestion 7 annonce dans l'architecture IPTV le ou les contenus C qui sont disponible auprès des noeuds feuille 6. En réponse à une requête d'un terminal, un noeud feuille 6 transmet le contenu C vers le terminal selon un protocole IPTV. Le noeud feuille 6 joue le rôle de serveur IPTV et peut par exemple gérer des requêtes de type « Replay » et « Fast-Zapping » utilisée dans l'architecture IPTV.

La **figure 4** représente un procédé de communication mise en oeuvre par un dispositif de communication 13 du domaine 2, amené à jouer le rôle de noeud feuille 6 pour la distribution d'un contenu C.

A l'étape F1, le dispositif de communication 13 surveille la réception d'un message d'information de la part de l'entité de commande 7, décrit précédemment en référence à l'étape E5. Ainsi, à l'étape F2, le dispositif de communication 13 boucle à l'étape F1 si aucun message d'information n'a été reçu et passe à l'étape F3 si un message d'information a été reçu.

A l'étape F3, le dispositif de communication 13 décide, en fonction notamment des informations contenues dans le message d'information reçu à l'étape F1, de participer ou non à la distribution du contenu C. S'il décide de ne pas participer, le dispositif de communication 13 boucle à l'étape F1. S'il décide de participer, le dispositif de communication 13 devient un noeud feuille 6 et passe à l'étape F4.

Comme expliqué précédemment en référence à l'étape E6, d'une part le noeud feuille 6 souscrit à l'arbre de distribution des données pour obtenir les données du contenu C de la part du noeud source 4, par la technique de diffusion groupée (étape F4), et d'autre part le noeud feuille 6 s'enregistre auprès de l'entité de gestion 12 en tant que client du réseau pair-à-pair (étape F5), et établit des liaisons 19 avec des clients 10.

Ainsi, à l'étape F6, le noeud feuille 6 reçoit des données du contenu C de la part du noeud feuille 4, par la technique de diffusion groupée, et à l'étape F7 le noeud feuille 6 transmet les données reçues vers un ou plusieurs client 10 à proximité. Par ailleurs, comme expliqué précédemment, le noeud feuille 6 peut décider périodiquement de continuer ou non à participer à la distribution du contenu C (étape F8).

La **figure 5** représente un procédé de communication mise en oeuvre par un dispositif de communication 13 du domaine 2, amené à jouer le rôle de noeud source 4 pour la distribution d'un contenu C.

A l'étape G1, le dispositif de communication 13 surveille la réception d'un message d'instruction de la part de l'entité de commande 7, décrit précédemment en référence à l'étape E5. En réponse à la réception de ce message d'instruction, le dispositif de communication 13 devient le noeud source 4 et s'enregistre alors auprès de l'entité de gestion 12 du réseau pair-à-pair (étape G3), établit des liaisons 19 avec les noeuds collecteurs 5 et commence à obtenir des données du contenu C par le réseau pair-à-pair (étape G4).

Par ailleurs, à l'étape G5, le noeud source 4 reçoit des requêtes de souscription à l'arbre de diffusion de données émises par les noeuds feuille à l'étape F4. Ainsi, à l'étape G6, le noeud source 4 transmet les données du contenu C vers les noeuds feuille 6, par la technique de diffusion groupée.

L'invention n'est pas limitée au mode de réalisation décrit en référence à la figure 1. Ainsi, dans une variante, les noeuds collecteurs, le noeud source, les noeuds feuille et tous les noeuds clients du réseau pair-à-pair sont situés dans le domaine d'un opérateur de télécommunications. Dans ce cas, les noeuds collecteurs collectent les données sur le réseau pair-à-pair, à l'intérieur du domaine.

## Revendications

1. Procédé de communication effectué par un dispositif de communication (13,6) d'un réseau de télécommunications (1), comprenant :
- une étape (F1) de réception d'un message d'information informant que des données sont disponibles auprès d'un noeud source en utilisant une technique de diffusion groupée et comprenant des informations d'audience desdites données à proximité du dispositif de communication ;
- une étape (F3) de décision de participation ou non à la distribution desdites données, en fonction desdites informations d'audience,
- en réponse à une décision de participation à la distribution desdites données, une étape (F4) de souscription, auprès dudit noeud source (4) du réseau de télécommunications (1) auprès duquel sont disponibles lesdites données, à un arbre de diffusion desdites données pour obtenir lesdites données en utilisant une technique de diffusion groupée ;
- une étape (F5) d'envoi, vers une entité de gestion (12) d'un réseau pair-à-pair gérant la diffusion desdites données sur le réseau pair-à-pair, d'un message d'enregistrement en tant que client du réseau pair-à-pair ;
- une étape (F6) de réception des données distribuées par le noeud source (4) en utilisant ladite technique de diffusion groupée ; et
- une étape (F7) de transmission des données reçues vers au moins un client (10) du réseau pair-à-pair, par distribution sur le réseau pair-à-pair.

2. Procédé de communication selon la revendication 1, dans lequel ledit message d'enregistrement comprend une information de localisation du dispositif de communication (6).

3. Procédé de communication selon la revendication 1, comprenant en outre une étape de distribution des données vers un terminal du réseau de télécommunications (1) en utilisant une technique différente de la distribution sur le réseau pair-à-pair.

4. Procédé de communication selon la revendication 1 comprenant en outre une étape de réévaluation périodique par le dispositif de communication (6) de sa décision de participation à la distribution des données.

5. Dispositif de communication (13,6) pour un réseau de télécommunications (1), comprenant :
- des moyens de réception d'un message d'information informant que des données sont disponibles auprès d'un noeud source en utilisant une technique de diffusion groupée et comprenant des informations d'audience desdites données à proximité du dispositif de communication ;
- des moyens de décision de participer ou non à une distribution desdites données en fonction desdites informations d'audience ;
- des moyens de souscription, en réponse à une décision de participer à la distribution desdites données, auprès dudit noeud source (4) du réseau de télécommunications (1) auprès duquel sont disponibles lesdites données, à un arbre de diffusion desdites données pour obtenir lesdites données en utilisant une technique de diffusion groupée ;
- des moyens d'envoi, vers une entité de gestion (12) d'un réseau pair-à-pair gérant la diffusion desdites données sur le réseau pair-à-pair, d'un message d'enregistrement en tant que client du réseau pair-à-pair ;
- des moyens de réception de données distribuées par le noeud source (4) en utilisant ladite technique de diffusion groupée ; et
- des moyens de transmission des données reçues vers au moins un client (10) du réseau pair-à-pair, par distribution sur le réseau pair-à-pair.

6. Procédé de communication effectué par une entité de gestion (7) d'un réseau de télécommunications (1), comprenant :
- une étape d'obtention d'informations d'audience de données distribuées dans le réseau de télécommunications,
- une étape (E2, E4) de décision d'utiliser ou non une technique de distribution hybride pour la distribution des données, en fonction des informations d'audience,
- en réponse à la décision d'utiliser la technique de distribution hybride :
• une étape de sélection d'un noeud dit source dans le réseau de télécommunications pour collecter lesdites données sur un réseau pair-à-pair ;
• une étape (E5) d'envoi d'un message d'instruction vers le noeud source sélectionné déclenchant la collecte par le noeud source desdites données ;
• une étape d'envoi d'un message d'information à des dispositifs de communication (13) du réseau de télécommunications les informant que lesdites données sont disponibles auprès du noeud source en utilisant une technique de diffusion groupée et comprenant une information d'audience desdites données à proximité desdits dispositifs de communication ;
• une étape de réception d'au moins un dispositif de communication (6) ayant souscrit à un arbre de distribution des données pour obtenir lesdites données du noeud source en utilisant la technique de diffusion groupée, d'un message l'informant que ledit dispositif de communication a décidé de participer à la distribution desdites données.

7. Entité de gestion d'un réseau de télécommunications (1), comprenant :
- des moyens d'obtention d'informations d'audience de données distribuées dans le réseau de télécommunications,
- des moyens de décision d'utiliser ou non une technique de distribution hybride pour la distribution des données, en fonction des informations d'audience, et
- des moyens, activés en réponse à la décision d'utiliser la technique de distribution hybride :
• de sélection d'un noeud dit source dans le réseau de télécommunications pour collecter lesdites données sur un réseau pair-à-pair ;
• d'envoi d'un message d'instruction vers le noeud source sélectionné déclenchant la collecte par le noeud source desdites données ;
• d'envoi d'un message d'information à des dispositifs de communication du réseau de télécommunications les informant que lesdites données sont disponibles auprès du noeud source en utilisant une technique de diffusion groupée et comprenant une information d'audience desdites données à proximité desdits dispositifs de communication ;
• de réception d'au moins un dispositif de communication ayant souscrit à un arbre de distribution des données pour obtenir lesdites données du noeud source en utilisant la technique de diffusion groupée, d'un message l'informant que ledit dispositif de communication a décidé de participer à la distribution desdites données.

8. Réseau de télécommunications (1) comprenant au moins un dispositif de communication (13) dit noeud source (4) et une pluralité de dispositifs de communication (13) selon la revendication 5, dits noeuds feuille (6), ledit noeud source comprenant :
- des moyens de réception, depuis au moins un client (5) d'un réseau pair-à-pair, de données distribuées sur le réseau pair-à-pair,
- des moyens de distribution des données vers lesdits noeuds feuille (6), du réseau de télécommunications (1) en utilisant une technique de diffusion groupée, lesdits noeuds feuilles étant aptes à transmettre les données reçues vers au moins un client (10) du réseau pair-à-pair, par distribution sur le réseau pair-à-pair.

9. Réseau de télécommunications selon la revendication 8, dans lequel le noeud source et les noeuds feuilles sont situés dans un domaine (2) d'un opérateur de télécommunications, le réseau de télécommunications comprenant en outre des premiers noeuds client (10) du réseau pair-à-pair situés dans ledit domaine (2) et au moins un deuxième noeud client (10') situé en dehors dudit domaine.

10. Réseau de télécommunications selon la revendication 8, comprenant en outre une entité de gestion du réseau selon la revendication 7.

11. Programme d'ordinateur comportant des instructions pour l'exécution des étapes du procédé de communication selon la revendication 1 ou 6 lorsque ledit programme est exécuté par un ordinateur.

12. Support d'informations lisible par un ordinateur et comportant le programme d'ordinateur selon la revendication 11.

## Patentansprüche

1. Kommunikationsverfahren, das von einer Kommunikationsvorrichtung (13, 6) eines Telekommunikationsnetzes (1) ausgeführt wird, umfassend:
- einen Schritt (F1) des Empfangens einer Informationsnachricht, die darüber informiert, dass Daten bei einem Quellknoten verfügbar sind, indem eine Multicast-Übertragungstechnik verwendet wird, und die Zuschauerinformationen der Daten in der Nähe der Kommunikationsvorrichtung aufweist,
- einen Schritt (F3) des Entscheidens über die Teilnahme oder nicht an der Verteilung der Daten in Abhängigkeit von den Zuschauerinformationen,
- als Antwort auf eine Entscheidung über die Teilnahme an der Verteilung der Daten einen Schritt (F4) des Abonnierens eines Verteilungsbaums der Daten bei dem Quellknoten (4) des Telekommunikationsnetzes (1), bei dem die Daten verfügbar sind, um die Daten zu erhalten, indem eine Multicast-Technik verwendet wird,
- einen Schritt des Sendens (F5) an eine Verwaltungseinheit (12) eines Peer-to-Peer-Netzwerks, die die Weitergabe der Daten auf dem Peer-to-Peer-Netzwerk verwaltet, einer Registrierungsnachricht als Client des Peer-to-Peer-Netzwerks,
- einen Schritt (F6) des Empfangens der Daten, die von dem Quellknoten (4) verteilt werden, indem die Multicast-Übertragungstechnik verwendet wird, und
- einen Schritt (F7) des Übertragens der empfangenen Daten an mindestens einen Client (10) des Peer-to-Peer-Netzwerks durch Verteilen auf dem Peer-to-Peer-Netzwerk.

2. Kommunikationsverfahren nach Anspruch 1, wobei die Registrierungsnachricht eine Lokalisierungsinformation der Kommunikationsvorrichtung (6) aufweist.

3. Kommunikationsverfahren nach Anspruch 1, ferner umfassend einen Schritt des Verteilens der Daten an ein Endgerät des Telekommunikationsnetzes (1) unter Verwendung von einer unterschiedlichen Technik des Verteilens auf dem Peer-to-Peer-Netzwerk.

4. Kommunikationsverfahren nach Anspruch 1, ferner umfassend einen Schritt des regelmäßigen Neubewertens durch die Kommunikationsvorrichtung (6) ihrer Entscheidung über die Teilnahme an der Verteilung der Daten.

5. Kommunikationsvorrichtung (13, 6) für ein Telekommunikationsnetz (1), umfassend:
- Mittel zum Empfangen einer Informationsnachricht, die darüber informiert, dass Daten bei einem Quellknoten verfügbar sind, indem eine Multicast-Übertragungstechnik verwendet wird, und die Zuschauerinformationen der Daten in der Nähe der Kommunikationsvorrichtung aufweist,
- Mittel zum Entscheiden über die Teilnahme oder nicht an der Verteilung der Daten in Abhängigkeit von den Zuschauerinformationen,
- Mittel zum Abonnieren, als Antwort auf eine Entscheidung über die Teilnahme an der Verteilung der Daten, eines Verteilungsbaums der Daten bei dem Quellknoten (4) des Telekommunikationsnetzes (1), bei dem die Daten verfügbar sind, um die Daten zu erhalten, indem eine Multicast-Technik verwendet wird,
- Mittel zum Senden an eine Verwaltungseinheit (12) eines Peer-to-Peer-Netzwerks, die die Weitergabe der Daten auf dem Peer-to-Peer-Netzwerk verwaltet, einer Registrierungsnachricht als Client des Peer-to-Peer-Netzwerks,
- Mittel zum Empfangen der Daten, die von dem Quellknoten (4) verteilt werden, indem die Multicast-Übertragungstechnik verwendet wird, und
- Mittel zum Übertragen der empfangenen Daten an mindestens einen Client (10) des Peer-to-Peer-Netzwerks durch Verteilen auf dem Peer-to-Peer-Netzwerk.

6. Kommunikationsverfahren, das von einer Verwaltungseinheit (7) eines Telekommunikationsnetzes (1) ausgeführt wird, umfassend:
- einen Schritt des Erhaltens von Zuschauerinformationen von Daten, die in dem Telekommunikationsnetz verteilt werden,
- einen Schritt (E2, E4) des Entscheidens über das Verwenden einer hybriden Verteilungstechnik oder nicht für die Verteilung der Daten in Abhängigkeit von den Zuschauerinformationen,
- als Antwort auf die Entscheidung, die hybride Verteilungstechnik zu verwenden:
• einen Schritt des Auswählens eines sogenannten Quellknotens in dem Telekommunikationsnetz, um die Daten in einem Peer-to-Peer-Netzwerk zu sammeln,
• einen Schritt (E5) des Sendens einer Instruktionsnachricht an den ausgewählten Quellknoten, die das Sammeln der Daten durch den Quellknoten auslöst,
• einen Schritt des Sendens einer Informationsnachricht an Kommunikationsvorrichtungen (13) des Telekommunikationsnetzes, die sie darüber informiert, dass Daten bei einem Quellknoten verfügbar sind, indem eine Multicast-Übertragungstechnik verwendet wird, und die eine Zuschauerinformation der Daten in der Nähe der Kommunikationsvorrichtung aufweist,
• einen Schritt des Empfangens von mindestens einer Kommunikationsvorrichtung (6), die einen Verteilungsbaum der Daten abonniert hat, um die Daten des Quellknotens zu erhalten, indem die Multicast-Technik verwendet wird, einer Nachricht, die sie darüber informiert, dass die Kommunikationsvorrichtung beschlossen hat, an der Verteilung der Daten teilzunehmen.

7. Verwaltungseinheit eines Telekommunikationsnetz (1), umfassend:
- Mittel zum Erhalten von Zuschauerinformationen von Daten, die in dem Telekommunikationsnetz verteilt sind,
- Mittel zum Entscheiden darüber, ob eine hybride Verteilungstechnik für die Verteilung der Daten in Abhängigkeit von den Zuschauerinformationen verwendet werden soll oder nicht und
- Mittel, die als Antwort auf die Entscheidung, die hybride Verteilungstechnik zu verwenden, aktiviert werden:
• zum Auswählen eines sogenannten Quellknotens in dem Telekommunikationsnetz, um die Daten in einem Peer-to-Peer-Netzwerk zu sammeln,
• zum Senden einer Instruktionsnachricht an den ausgewählten Quellknoten, die das Sammeln der Daten durch den Quellknoten auslöst,
• zum Senden einer Informationsnachricht an Kommunikationsvorrichtungen des Telekommunikationsnetzes, die sie darüber informiert, dass Daten bei einem Quellknoten verfügbar sind, indem eine Multicast-Übertragungstechnik verwendet wird, und die eine Zuschauerinformation der Daten in der Nähe der Kommunikationsvorrichtung aufweist,
• zum Empfangen von mindestens einer Kommunikationsvorrichtung, die einen Verteilungsbaum der Daten abonniert hat, um die Daten des Quellknotens zu erhalten, indem die Multicast-Technik verwendet wird, einer Nachricht, die sie darüber informiert, dass die Kommunikationsvorrichtung beschlossen hat, an der Verteilung der Daten teilzunehmen.

8. Telekommunikationsnetz (1), umfassend mindestens eine Kommunikationsvorrichtung (13), die Quellknoten (4) genannt wird, und mehrere Kommunikationsvorrichtungen (13) nach Anspruch 5, die Blattknoten (6) genannt werden, wobei der Quellknoten aufweist:
- Mittel zum Empfangen von mindestens einem Client (5) eines Peer-to-Peer-Netzwerks von Daten, die auf dem Peer-to-Peer-Netzwerk verteilt sind,
- Mittel zum Verteilen der Daten an die Blattknoten (6) des Telekommunikationsnetzes (1), indem eine Multicast-Übertragungstechnik verwendet wird, wobei die Blattknoten geeignet sind, die empfangenen Daten an mindestens einen Client (10) des Peer-to-Peer-Netzwerks durch Verteilen auf dem Peer-to-Peer-Netzwerk zu übertragen.

9. Telekommunikationsnetz nach Anspruch 8, wobei sich der Quellknoten und die Blattknoten in einer Domain (2) eines Telekommunikationsbetreibers befinden, wobei das Telekommunikationsnetz ferner erste Client-Knoten (10) des Peer-to-Peer-Netzwerks, die sich in der Domain (2) befinden, und mindestens einen zweiten Client-Knoten (10') aufweisen, der sich außerhalb der Domain befindet.

10. Telekommunikationsnetz nach Anspruch 8, ferner umfassend eine Verwaltungseinheit des Netzes nach Anspruch 7.

11. Computerprogramm, das Anweisungen für das Ausführen der Schritte des Kommunikationsverfahrens nach Anspruch 1 oder 6 aufweist, wenn das Programm von einem Computer ausgeführt wird.

12. Informationsträger, der von einem Computer lesbar ist und das Computerprogramm nach Anspruch 11 aufweist.

## Claims

1. Communication method performed by a communication device (13, 6) of a telecommunication network (1), comprising:
- a step (F1) of receiving an information message informing that data are available from a source node by using a grouped broadcasting technique and comprising information on the audience of said data in proximity to the communication device;
- a step (F3) of deciding to participate or not in the distribution of said data as a function of said audience information,
- in response to a decision to participate in the distribution of said data, a step (F4) of subscribing, with said source node (4) of the telecommunication network (1) from which said data are available, to a tree structure of broadcasting of said data to obtain said data by using a grouped broadcasting technique;
- a step (F5) of sending, to a management entity (12) of a peer-to-peer network managing the broadcasting of said data over the peer-to-peer network, of a message of registration as client of the peer-to-peer network;
- a step (F6) of reception of the data distributed by the source node (4) by using said grouped broadcasting technique; and
- a step (F7) of transmission of the received data to at least one client (10) of the peer-to-peer network, by distribution over the peer-to-peer network.

2. Communication method according to Claim 1, in which said registration message comprises information on the location of the communication device (6).

3. Communication method according to Claim 1, further comprising a step of distribution of the data to a terminal of the telecommunication network (1) by using a different technique of distribution over the peer-to-peer network.

4. Communication method according to Claim 1, further comprising a step of periodic reassessment by the communication device (6) of its decision to participate in the distribution of the data.

5. Communication device (13, 6) for a telecommunication network (1), comprising:
- means for receiving an information message informing that data are available from a source node by using a grouped broadcasting technique and comprising information on the audience of said data in proximity to the communication device;
- means for deciding to participate or not in the distribution of said data as a function of said audience information;
- means for subscribing, in response to a decision to participate in the distribution of said data, with said source node (4) of the telecommunication network (1) from which said data are available, to a tree structure of broadcasting of said data to obtain said data by using a grouped broadcasting technique;
- means for sending, to a management entity (12) of a peer-to-peer network managing the broadcasting of said data over the peer-to-peer network, of a message of registration as client of the peer-to-peer network;
- means for receiving the data distributed by the source node (4) by using said grouped broadcasting technique; and
- means for transmitting the received data to at least one client (10) of the peer-to-peer network, by distribution over the peer-to-peer network.

6. Communication method performed by a management entity (7) of a telecommunication network (1), comprising:
- a step of obtaining information on the audience of data distributed in the telecommunication network,
- a step (E2, E4) of deciding to use or not use a hybrid distribution technique for the distribution of the data, as a function of the audience information,
- in response to the decision to use the hybrid distribution technique:
• a step of selecting a so-called source node in the telecommunication network to collect said data over a peer-to-peer network;
• a step (E5) of sending of an instruction message to the selected source node triggering the collection by the source node of said data;
• a step of sending of an information message to communication devices (13) of the telecommunication network informing them that said data are available from the source node by using a grouped broadcasting technique and comprising information on the audience of said data in proximity to said communication devices;
• a step of receiving, from at least one communication device (6) having subscribed to a tree structure of broadcasting of the data to obtain said data from the source node by using the grouped broadcasting technique, of a message informing it that said communication device has decided to participate in the distribution of said data.

7. Management entity of a telecommunication network (1), comprising:
- means for obtaining information on the audience of data distributed in the telecommunication network,
- means for deciding to use or not use a hybrid distribution technique for the distribution of the data, as a function of the audience information, and
- means, activated in response to the decision to use the hybrid distribution technique, for:
• selecting a so-called source node in the telecommunication network to collect said data over a peer-to-peer network;
• sending an instruction message to the selected source node triggering the collection by the source node of said data;
• sending an information message to communication devices of the telecommunication network informing them that said data are available from the source node by using a grouped broadcasting technique and comprising information on the audience of said data in proximity to said communication devices;
• receiving, from at least one communication device having subscribed to a tree structure of broadcasting of the data to obtain said data from the source node by using the grouped broadcasting technique, of a message informing it that the communication device has decided to participate in the distribution of said data.

8. Telecommunication network (1) comprising at least one communication device (13), called source node (4), and a plurality of communication devices (13) according to Claim 5, called leaf nodes (6), said source node comprising:
- means for receiving, from at least one client (5) of a peer-to-peer network, data distributed over the peer-to-peer network,
- means for distributing data to said leaf nodes (6), of the telecommunication network (1), by using a grouped broadcasting technique, said leaf nodes being capable of transmitting the received data to at least one client (10) of the peer-to-peer network, by distribution over the peer-to-peer network.

9. Telecommunication network according to Claim 8, in which the source node and the leaf nodes are located in a domain (2) of a telecommunications operator, the telecommunication network further comprising first client nodes (10) of the peer-to-peer network located in said domain (2) and at least one second client node (10') located outside of said domain.

10. Telecommunication network according to Claim 8, further comprising a management entity of the network according to Claim 7.

11. Computer program comprising instructions for the execution of the steps of the communication method according to Claim 1 or 6 when said program is run by a computer.

12. Information medium that can be read by a computer and comprising the computer program according to Claim 11.
